Europäisches Patentamt

European Patent Office

Office européen des brevets

(11) Numéro de publication: **0 131 503**
**B1**

(12) **FASCICULE DE BREVET EUROPÉEN**

(45) Date de publication du fascicule du brevet:
13.01.88

(21) Numéro de dépôt: **84401341.7**

(22) Date de dépôt: **26.06.84**

(51) Int. Cl.⁴: **H 01 G 4/30,** H 01 G 13/02

(54) Procédé de fabrication d'un condensateur feuilleté.

(30) Priorité: **06.07.83 FR 8311258**

(43) Date de publication de la demande:
**16.01.85 Bulletin 85/3**

(45) Mention de la délivrance du brevet:
**13.01.88 Bulletin 88/2**

(84) Etats contractants désignés:
**BE DE GB IT**

(56) Documents cité:
**EP-A-0 027 650**
**DE-A-2 552 610**
**GB-A-2 094 061**

(73) Titulaire: **COMPAGNIE EUROPEENNE DE COMPOSANTS ELECTRONIQUES LCC, 50, rue Jean -Pierre Timbaud B.P. 301, F-92402 Courbevoie (FR)**

(72) Inventeur: **Bernard, Daniel, THOMSON- CSF SCPI 173, bld Haussmann, F-75379 Paris Cedex 08 (FR)**

(74) Mandataire: **Ruellan- Lemonnier, Brigitte, THOMSON- CSF SCPI 19, avenue de Messine, F-75008 Paris (FR)**

## Description

La présente invention concerne un procédé de fabrication de condensateurs feuilletés constitués de couches de diélectriques séparées par des couches métalliques ou armatures, lesdites couches métalliques ou armatures étant destinées à être reliées entre elles par des connexions électriques latérales, les paires entre elles et les impaires entre elles, le procédé comprenant une étape où on réalise un étage de n condensateurs-mères côte à côte sur un même support, de manière connue en soi. Un tel procédé est connu du GB-A-2 094 061. La présente invention concerne plus particulièrement la réalisation de condensateurs mères obtenus par bobinage sur une roue de grand diamètre de films diélectriques métallisés, chaque condensateur mère étant séparé des condensateurs mères suivants par une couche séparatrice et/ou intercalaire. Chaque condensateur mère peut être ensuite, si cela est nécessaire, découpé en condensateurs individuels de dimensions plus réduites. Ils peuvent être dans d'autres cas, utilisés tel quel.

Une telle technique de réalisation de condensateurs mères et de condensateurs individuels obtenus par découpage de ces condensateurs mères est décrite dans le brevet français 2 011 553. Elle consiste à bobiner simultanément deux films diélectriques métallisés décalés latéralement l'un par rapport à l'autre de manière à réaliser un premier empilement sur la jante d'une roue de grand diamètre. Une couche intercalaire de largeur supérieure à la largeur du condensateur mère ainsi formé est alors introduite sur celui-ci de la manière décrite par exemple dans la demande allemande 2 424 368, le bobinage d'un second condensateur mère s'effectuant ensuite sur la couche intercalaire, sans nécessiter de couper les films diélectriques métallisés. Un tel procédé de réalisation de condensateurs présente de nombreuses variantes telles que celles decrites dans les deux brevets précités. Il est également possible de réaliser l'empilage des films diélectriques sur une surface plane tel que décrit dans les brevets français 879 280 ou 903 040. Quel que soit le procédé d'empilage utilisé, il est également utile d'utiliser des couches intercalaires permettant le schoopage simultané des flancs latéraux de tous les condensateurs mères et facilitant leur séparation après schoopage.

Si ce procédé ne présente pas de difficultés lorsqu'on utilise des films diélectriques et métalliques assez larges, on constate que pour des films relativement étroits, il devient nécessaire de limiter la hauteur de l'empilement des condensateurs mères, sinon l'empilement se couche à droite ou à gauche par rapport à la roue, ce couchage pouvant se produire aux différentes étapes du procédé de fabrication.

La limitation de la hauteur des différents empilements ou de l'ensemble des empilements sur chaque roue réduit considérablement l'intérêt que peut présenter un tel procédé lorsqu'on l'utilise avec des films de faible largeur de l'ordre de quelques millimètres. On constate en pratique que si l'on utilise des films de l'ordre de 1 cm de largeur, on peut réaliser une pluralité d'empilements sur une hauteur de l'ordre de 10 cm. Par contre lorsqu'on utilise des films de 5 mm de largeur, la hauteur de l'empilement est limitée à 2 cm environ.

L'invention permet de résoudre le problème posé d'une manière simple et efficace. Le procédé selon l'invention comprend une étape où:

a - on réalise un étage den n condensateurs mères côte à côte sur un même support, de manière connue en soi, le procédé étant caractérisé en ce qu'il comprend aussi les étapes où:

b - on dépose un intercalaire commun sur les n condensateurs mères,

c - on réalise sur cet intercalaire commun un autre étage de n condensateurs mères côte à côte dont les bords sont sensiblement alignés sur ceux de l'étage précédent dans une même pile,

d - on recommence les étapes b et c de façon à réaliser un ensemble formé par n empilements côte à côte des n condensateurs mères, chaque empilement comportant m étages,

e - on schoope globalement les deux flancs latéraux extérieurs de l'ensemble,

f - on sépare, parallèlement aux flancs latéraux schoopés, au moins entre deux des empilements successifs de condensateurs mères, de manière à créer deux sous-ensembles de condensateurs mères comportant chacun un des deux flancs latéraux revêtus de métal de schoopage et un flanc latéral non schoopé,

g - on schoope le flanc latéral non schoopé de chaque sous-ensemble,

h - on recommence les étapes f et g si nécessaire, jusqu'à obtenir n sous-ensembles de m condensateurs-mères dont les deux flancs latéraux extérieurs sont schoopés,

i - on sépare les condensateurs-mères les uns des autres.

La réalisation de condensateurs individuels à partir des condensateurs-mères est alors effectuée de manière connue en soi.

L'étape f de séparation entre deux empilements peut s'effectuer de différentes manières:

1. On peut schooper latéralement les deux flancs extérieurs séparer entre les empilements n et n-1, schooper les deux flancs latéraux ainsi créés, recommencer la même opération entre les empilements n-1 et n-2, etc...

2. Lorsque n est pair, on peut effectuer la séparation entre les empilements 1 et 2 d'une part, n et n-1 d'autre part, schooper les quatre flancs latéraux ainsi créés, etc... Cette façon de procéder est plus intéressante industriellement lorsque les condensateurs ont été bobinés sur une roue qui est mise en rotation en cours de schoopage, la durée des opérations de

manutention étant ainsi diminuée.

On a constaté dans le procédé décrit ci-dessus que la présence d'un intercalaire commun permettait d'obtenir une plus grande stabilité de l'ensemble au cours du bobinage et d'atteindre ainsi à nouveau les mêmes hauteurs d'empilements que pour les condensateurs réalisés avec des films de grande largeur. On constate également que lors de la séparation parallèlement aux flancs latéraux schoopés (étape f), la présence du schoopage sur l'un des flancs de l'ensemble permet d'éviter l'affaissement dudit ensemble malgré la faible largeur du film et la grande hauteur de l'ensemble. Il suffit ensuite d'assurer normalement le schoopage de l'autre flanc pour amener un maintien définitif.

Bien entendu, les deux alternatives de l'étape f citées ci-dessus peuvent être combinées. Par exemple, lorsque l'on a un nombre impair de condensateurs mères bobinés côte à côte (n impair), on peut comme dans la deuxième alternative, séparer simultanément les ensembles d'empilements externes de cet ensemble de m x n condensateurs mères jusqu'à l'obtention de trois condensateurs mères côte à côte auquel cas on applique alors la première alternative.

L'intercalaire commun utilisé dans le procédé selon l'invention doit être séparable en une pluralité d'intercalaires au cours de l'étape f du procédé. Dans ce but, cet intercalaire sera de préférence un film de matière plastique de rigidité suffisante, découpable à la scie, à l'aide d'un fil chaud, un faisceau laser, etc... ou déjà prédécoupé par une série d'entailles successives sous forme de pointillés de manière à faciliter la séparation. Cet intercalaire peut également être un film métallique découpable à la scie ou prédécoupé comme ci-dessus.

La distance séparant chaque condensateur mère ($m_i$, $n_i$) d'un empilement, du condensateur le plus proche de l'empilement voisin ($m_i$, $n_{i+1}$ ou $n_{i-1}$) sera de préférence suffisante pour qu'après séparation de deux ensembles adjacents, les intercalaires débordent suffisamment pour jouer le rôle de couches intercalaires après schoopage des flancs latéraux adéquats. Toutefois, il est possible également de les positionner suffisamment près les uns des autres pour permettre uniquement le passage du moyen de découpe entre deux empilements verticaux de m condensateurs-mères superposés, la fonction essentielle de l'intercalaire commun étant d'être commun en cours de bobinage et jusqu'au schoopage d'un flanc latéral assurant une stabilité suffisante à un ensemble de m condensateurs-mères.

L'empilage des films s'effectuera par bobinage sur une roue de grand diamètre de manière connue en soi. De préférence, on réalisera un bobinage simultané des n condensateurs mères de chaque étage. Bien entendu, il est préférable pour des questions de stabilité, que chacun des n empilements disposés côte à côte entre deux intercalaires successifs ait sensiblement la même hauteur, c'est-à-dire en pratique que l'on bobine simultanément le même nombre de tours pour chaque empilement.

Pour réaliser de manière simple, efficace et économique le procédé décrit ci-dessus, on utilisera de préférence une roue de grand diamètre équipée d'une pluralité de jantes (n-1 jantes séparables de la n$^{ième}$. solidaire de la roue). Chaque jante est par exemple fixée à la précédente de manière à permettre un démontage aisé. La largeur de chaque jante est supérieure à la largeur des films à bobiner pour réaliser les condensateurs mères et supérieure ou égale à chaque intercalaire après séparation de l'intercalaire commun. Autrement dit, la somme de la largeur des jantes est sensiblement égale à la largeur de l'intercalaire commun.

Bien entendu, on peut bobiner côte à côte des films de différentes largeurs et faire ainsi simultanément des condensateurs mères plus larges que d'autres. Il suffit pour cela d'adapter la largeur des jantes et celle des condensateurs à réaliser, selon les indications données ci-dessus.

L'invention sera mieux comprise à l'aide des exemples de réalisation suivants, donnés à titre non limitatif, conjointement avec les figures qui représentent:
- la figure 1, une vue schématique en coupe illustrant le procédé de l'art antérieur,
- les figures 2 à 5, les différentes étapes du procédé selon l'invention dans le cas simplifié de deux ensembles de condensateurs mères bobinés côte a côte,
- la figure 6, une vue en coupe simplifiée d'une roue multijantes permettant de bobiner simultanément une pluralité de condensateurs mères.

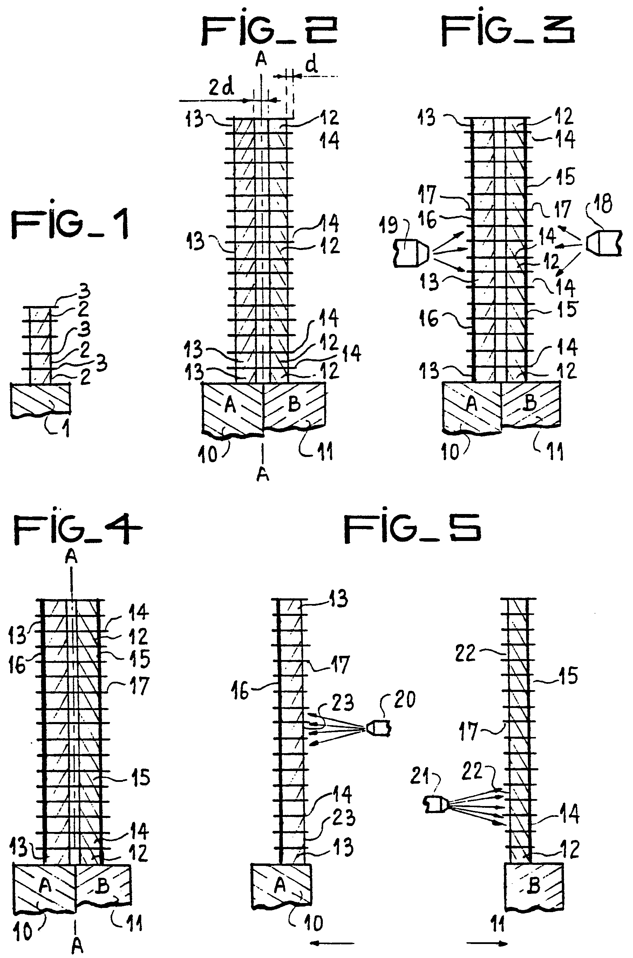

Sur la figure 1, est représentée, schématiquement en coupe, une vue partielle d'un ensemble d'empilements de condensateurs mères selon l'art antérieur. Une roue 1 de grand diamètre supporte sur sa jante une pluralité de condensateurs mères 2 séparés entre eux par des intercalaires 3 de largeur supérieure à la largeur des condensateurs mères 2, de manière à permettre au cours de l'étape suivante de schoopage de l'ensemble des condensateurs mères ainsi superposés le débordement desdits intercalaires de manière à faciliter la séparation des condensateurs mères 2 après schoopage. Une telle technique est décrite dans l'art antérieur en particulier dans les brevets précités. On remarque sur cette figure l'inconvénient de ce procédé à savoir l'instabilité de l'empilement lorsque la largeur des condensateurs mères 2 est faible, ce qui limite nécessairement le nombre de condensateurs mères superposés afin d'éviter la chute de l'ensemble avant la fin de l'opération de schoopage.

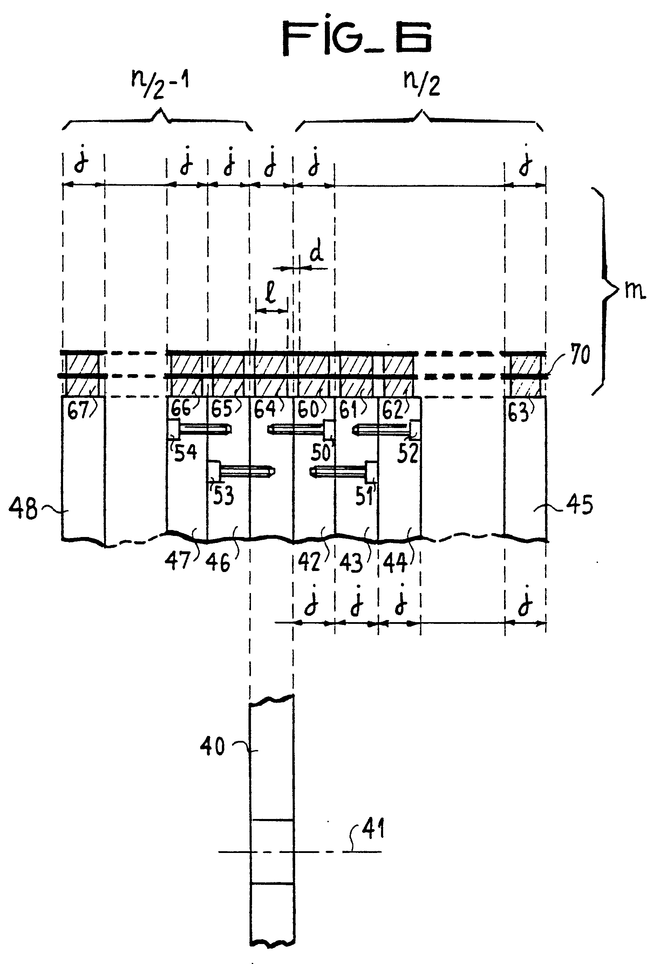

Sur les figures 2 a 5, sont représentées les différentes étapes du procédé selon l'invention, illustrées schematiquement avec deux ensembles d'empilements côte a côte.

Deux supports jointifs 14 et 11 (par exemple deux roues A et B situées côte à côte ou une roue sur laquelle serait fixée une jante 11) reçoivent chacun une pluralité d'empilements respectivement 13 et 12 (m empilements 12 et 13 en hauteur), chaque ensemble de deux empilements (n = 2 dans le cas présent) étant muni d'un intercalaire commun 14 qui déborde légèrement de part et d'autre respectivement du bord gauche de l'empilement 13 et du bord droit de l'empilement 12 sur la figure. Le débord aura une valeur sensiblement de l'ordre de d, cette valeur permettant à l'intercalaire 14 de remplir également une fonction de séparation après schoopage. Les ensembles d'empilements 13 et 12 sont séparés d'une distance de l'ordre de 2d l'un de l'autre, et sont disposés de manière sensiblement symétrique par rapport à l'axe AA le long duquel les deux supports A et B sont jointifs. Bien entendu, si le mode de séparation de l'intercalaire selon la ligne AA comme on le verra ci-après entraîne au cours de cette opération la disparition d'une bonne partie de l'épaisseur 2d, on devra éventuellement tenir compte de ceci en rajoutant ladite épaisseur à la dimension 2d pour permettre à l'intercalaire de remplir également ladite fonction.

Sur la figure 2, les empilements 12 et 13 sont realisés par bobinage simultané respectivement de deux films diélectriques métallisés possédant une marge latérale métallisée comme cela se pratique couramment dans l'art antérieur. La hauteur des empilements est la même, la largeur de chacune des jantes 10 et 11 comparativement à celle du film n'a pas d'importance dans le cas de deux condensateurs, seule étant importante la position sensiblement symétrique (mais non nécessaire) de l'ensemble par rapport à l'axe AA.

Sur la figure 3, est représentée l'étape suivante du procédé selon l'invention, étape au cours de laquelle on schoope les flancs latéraux de l'ensemble des empilements 12 et 13, formant ainsi des connexions latérales de schoopage respectivement 15 et 16 sur les flancs latéraux de chaque condensateur mère. Après schoopage, les intercalaires 14 dépassent encore légèrement dudit schoopage en des points tels que 17. Ce schoopage est réalisé de manière connue en soi à l'aide de pistolets de schoopage respectivement 18 et 19 déplacés de manière relative, simultanément ou séquentiellement devant chacun des flancs latéraux à schooper.

Sur la figure 4, est représentée schématiquement l'étape de découpage de l'ensemble des empilements. Ce découpage s'effectue de la manière indiquée ci-dessus suivant le type d'intercalaire 14 utilisé. Ce découpage doit s'effectuer sensiblement le long de l'axe AA pour que chaque intercalaire 14 après séparation le long de AA puisse également remplir sa fonction de séparation. Bien entendu, ceci encore une fois ne serait pas nécessaire dans le cas de deux empilements côte à côte tels que représentés sur ces figures, dans le cas où lesdits empilements seraient situés à une distance supérieure à la distance 2d, l'essentiel (selon un mode préférentiel de réalisation de l'invention) étant qu'après découpage des intercalaires, chaque intercalaire déborde par rapport aux flancs latéraux des condensateurs mères d'une distance d'au moins d (en considérant que la distance dest la distance minimale nécessaire pour que l'intercalaire après schoopage puisse permettre la séparation aisée des condensateurs mères. Cette distance dépend bien entendu notamment des conditions de schoopage).

Sur la figure 5, les deux supports 10 et 11 ont été séparés l'un de l'autre par exemple la roue 10 d'un côté et la jante 11 de l'autre, chaque support A et B supportant un ensemble d'empilements 13 séparés par des intercalaires ou portions d'intercalaires 14. Ces empilements, de hauteur beaucoup plus grande que celle de la figure 1 bien que les condensateurs mères aient une section identique, se maintiennent en équilibre du fait de la présence d'une couche de schoopage (15, 16) sur l'un de leurs flancs latéraux. La dernière opération du procédé selon l'invention consiste donc à réaliser un schoopage des flancs latéraux non encore schoopés de ces empilements à l'aide des pistolets de schoopage 20 et 21, réalisant ainsi des couches de schoopage 23 et 22. A ce stade du procédé, on se retrouve dans les mêmes conditions que dans l'art antérieur, et la séparation des condensateurs mères des uns des autres ainsi que la découpe éventuelle en condensateurs individuels peut s'effectuer de manière bien connue de l'homme de métier.

Sur la figure 6, est représentée une vue en coupe schématique de n x m empilements disposés côte a côte, chaque ensemble de m empilements étant réalisé sur une jante fixée à la précédente. Dans cet exemple, on montre la réalisation de condensateurs mères ayant la même largeur comme expliqué ci-avant, la réalisation de condensateurs de largeurs différentes se déduisant aisément de cet exemple. Une roue 40 tournant autour d'un axe 41 supporte une pluralité de jantes 42, 43, 44, 45, sur la partie droite de la figure, et 46, 47, 48, sur la partie gauche de celle-ci. On a ainsi, par exemple, n/2 - 1 jante sur la partie gauche de la roue 40 fixée à celle-ci, et n/2 jante fixée sur la partie droite de la roue 40. Chaque jante est par exemple fixée à l'aide de plusieurs vis (une seule représentée sur la figure) à la jante précédente, telles que les vis 50 qui fixent la jante 42 à la roue 40, 51 fixant la jante 43 à la jante 42, 52 fixant la jante 44 à la jante 43, ou 53 fixant la jante 46 à la roue 40, 54 fixant la jante 47 à la jante 46. Chaque jante a ici une largeur identique et identique à celle de la roue qui sera appelée j dans toute la suite de l'exposé. Sur chacune de ces jantes sont bobinés simultanément des condensateurs mères tels que 60, 61, 62, 63, 64, 65, 66, 67. Après bobinage du nombre de tours simultanés du nombre de tours voulus, on introduit un intercalaire commun 70 au-dessus de l'ensemble de ces condensateurs mères. L'opération continue ensuite de la manière indiquée ci-dessus jusqu'à l'obtention de m étages dans chaque empilement. On notera que chaque empilement a une largeur sensiblement égale de l'ordre de 1, laissant une distance d $= \frac{l-1}{2}$ suffisante pour permettre à l'intercalaire après découpage de remplir sa fonction. Bien entendu, il est nécessaire dans le cas présent de réaliser un repérage des flancs latéraux des films en cours de bobinage de manière à les aligner entre eux sensiblement de la même façon quel que soit l'étage m considéré. Ceci se fait de manière connue en soi de la même manière que dans l'art antérieur, où le problème est le même. On réalise ensuite le schoopage des flancs extérieurs de l'ensemble comme décrit précédemment puis on sépare les jantes 45 et 48 de l'ensemble. Les flancs non schoopés des empilements situés sur ces deux jantes 45 et 48 sont alors schoopés et les condensateurs séparés de manière connue en soi, tandis qu'on effectue également le schoopage des flancs non schoopés des n-2 ensemble de m condensateurs mères restant solidaires de la roue 40, et ainsi de suite jusqu'à l'obtention d'un ensemble de deux condensateurs sur la roue 40 auquel cas on procède comme sur les figures 2 à 5.

Bien entendu, dans l'exemple ci-dessus, on a supposé que n était un nombre pair comme expliqué ci-avant, si n est un nombre impair (soit 2p + 1), d'une part, on place p jantes d'un côté de la roue et p jantes de l'autre côté de la roue, et d'aute part, on procède comme précédemment jusqu'à l'obtention de 3 ensembles de m condensateurs mères sur 3 jantes successives. On procède ensuite à la découpe selon l'axe AA de manière à ne laisser que d'un côté un ensemble de m condensateurs mères superposés avec un flanc latéral schoopé dont on schoope l'autre côté, et un ensemble de 2 m condensateurs mères avec un flanc latéral schoopé dont on schoope le second côté et l'on procede ensuite comme sur les exemples des figures 2 à 5.

Bien entendu, le terme intercalaire a une signification plus générale que celle donnée dans les exemples ci-dessus. Ce terme englobe également les couches dites "séparatrices et/ou intercalaires" prévues dans le FR-A-2 011 553 et leur quatre variantes d'utilisation qui font partie du domaine de l'invention. Le seul point nécessaire à la couche "intercalaire" selon l'invention est d'être continue entre deux condensateurs-mères d'un même étage, de manière à assurer le maintien en hauteur desdits condensateurs-mères en cours de bobinage. Mais cette couche intercalaire et/ou séparatrice n'est pas nécessairement plus large, après découpe que le condensateur-mère lui-même, comme expliqué dans ledit brevet français.

## Revendications

1. Procédé de fabrication de condensateurs feuilletés constitués de couches diélectriques séparées par des couches métalliques ou armatures, lesdites couches métalliques ou armatures étant destinées à être reliées par des connexions électriques latérales, les paires entre elles et les impaires entre elles, le procédé comprenant une étape:

a - où on réalise un étage de n condensateurs-mères (12, 13) côte à côte sur un même support (10, 11), de manière connue en soi, le procédé étant caractérisé en ce qu'il comprend aussi les étapes:

b - où on dépose un intercalaire commun (14) sur les n condensateurs-mères (12, 13),

c - où on réalise sur cet intercalaire commun (14) un autre étage de n condensateurs-mères (12, 13) côte à côte dont les bords sont sensiblement alignés sur ceux de l'étage précédent dans une même pile,

d - où on recommence les étapes b et c de façon à réaliser un ensemble formé par n empilements côte à côte des n condensateurs-mères (12, 13), chaque empilement comportant m étages,

e - où on schoope globalement les deux flancs latéraux extérieurs (15, 16) de l'ensemble,

f - où on sépare, parallèlement aux flancs latéraux schoopés, au moins entre deux des empilements successifs de condensateurs-mères, de manière à créer deux sous-ensembles de condensateurs-mères (12) comportant chacun un des deux flancs latéraux (15, 16) revêtus de métal de schoopage et un flanc latéral (22, 23) non schoopé,

g - on schoope le flanc latéral (22) non schoopé de chaque sous-ensemble,

h - on recommence les étapes f et g si nécessaire, jusqu'à obtenir n sous-ensembles de m condensateurs-mères (12) dont les deux flancs latéraux extérieurs (15, 22) sont schoopés,

i - on sépare les condensateurs mères les uns des autres, de manière connue en soi.

2. Procédé de fabrication de condensateurs feuilletés selon la revendication 1, dans lequel le nombre n des empilements est un nombre pair, caractérisé en ce que, après létape e, on sépare entre les empilements n et n-1 d'une part et les empilements 1 et 2 d'autre part, puis on schoope les quatre flancs latéraux ainsi créés, et on recommence ces opérations de séparation et de schoopage jusqu'à obtenir n ensembles de m condensateurs-mères (12, 13) dont les deux flancs latéraux (15, 22, 16, 23) sont schoopés, après quoi on passe à l'étape i du procédé.

3. Procédé de fabrication de condensateurs feuilletés selon la revendication 1, dans lequel le nombre n des empilements est impair, caractérisé en ce que après l'étape e on sépare les empilements entre les sous-ensembles n et n-1 d'une part et 1 et 2 d'autre part, on schoope les quatre flancs latéraux ainsi créés, on recommence l'opération jusqu'à l'obtention de trois empilements des condensateurs-mères côte à côte, on sépare entre deux des trois empilements successifs, on schoope les deux flancs latéraux ainsi créés puis on recommence la même opération avec les deux empilements restants, enfin on effectue l'étape i du procédé.

4. Procédé de fabrication de condensateurs feuilletés selon l'une des revendications 1 à 4, caractérisé en ce que l'on utilise un intercalaire sous forme d'un film de matière plastique.

5. Procédé de fabrication de condensateurs feuilletés selon l'une des revendications 1 à 4, caractérisé en ce que l'intercalaire commun est un intercalaire métallique.

6. Procédé de fabrication de condensateurs feuilletés selon l'une des revendications 5 ou 6, caractérisé en ce que l'intercalaire est prédécoupé aux emplacements situés entre les empilements.

7. Procédé de fabrication de condensateurs feuilletés selon l'une des revendications 1 à 7, caractérisé en ce que la distance entre chaque condensateur mère ($m_i$, $n_i$) d'un empilement, du condensateur le plus proche que l'empilement voisin ($m_i$, $n_{i+1}$ ou $n_{i-1}$) est suffisante pour qu'après séparation des deux empilements adjacents, les intercalaires débordent pour permettre la séparation des condensateurs-mères le long des couches intercalaires après schoopage des flancs latéraux.

8. Procédé de fabrication de condensateurs feuilletés selon l'une des revendications 1 à 8, caractérisé en ce que chaque condensateur-mère est réalisé par bobinage simultané de deux films de matière plastique métallisée, dont les couches métalliques sont latéralement décalées l'une par rapport à l'autre.

## Patentansprüche

1. Verfahren zur Herstellung von Folienkondensatoren, die aus durch Metallschichten oder Beläge getrennten dielektrischen Schichten bestehen, wobei die Metallschichten oder Beläge dazu bestimmt sind, durch seitliche elektrische Verbindungen miteinander verbunden zu werden, die geradzahligen miteinander und die ungeradzahligen miteinander, wobei das Verfahren einen Schritt enthält, in dem:

a- eine Lage von n Mutterkondensatoren (12, 13) nebeneinander auf demselben Träger (10, 11) in an sich bekannter Weise hergestellt wird, wobei das Verfahren dadurch gekennzeichnet ist, daß es ferner Schritte enthält, in denen:

b- auf die n Mutterkondensatoren (12, 13) eine gemeinsame Zwischenschicht (14) aufgetragen wird,

c- auf dieser gemeinsamen Zwischenschicht (14) eine weitere Lage von n Mutterkondensatoren (12, 13), die nebeneinander liegen und deren Kanten im wesentlichen mit denen der vorigen Lage einer Schichtung fluchten, hergestellt werden,

d- die Schritte b und c wiederholt durchgeführt werden, um eine Menge aus n nebeneinanderliegenden Schichtungen von n Mutterkondensatoren (12, 13) herzustellen, wobei jede Schichtung m Lagen enthält,

e- die beiden äußeren Seitenflächen (15, 16) der Menge global schoopiert werden,

f- parallel zu den schoopierten Seitenflächen mindestens zwei aufeinanderfolgende Schichtungen von Mutterkondensatoren getrennt werden, so daß zwei Untermengen von Mutterkondensatoren (12) erzeugt werden, deren je eine der beiden Seitenflächen (15, 16) mit Schoopiermetall bedeckt ist und die eine nicht schoopierte Seitenfläche (22, 23) enthalten,

g- die nicht schoopierte Seitenfläche (22) jeder Untermenge schoopiert wird,

h- die Schritte f und g, falls nötig, wiederholt werden, bis n Untermengen von m Mutterkondensatoren (12) erhalten werden, deren beide Seitenaußenflächen (15, 22) schoopiert sind,

i- die Mutterkondensatoren in an sich bekannter Weise voneinander getrennt werden.

2. Verfahren zur Herstellung von Folienkondensatoren nach Anspruch 1, bei welchem die Anzahl n von Schichtungen eine gerade Zahl ist, dadurch gekennzeichnet, daß nach den Schritten e die Schichtungen n und n-1 einerseits und die Schichtungen 1 und 2 andererseits getrennt werden, dann die vier so erzeugten Seitenflächen schoopiert werden, und dann die Abläufe des Trennens und des Schoopierens so lange wiederholt werden, bis man n Mengen von m Mutterkondensatoren (12, 13) erhält, deren beide Seitenflächen (15, 22, 16, 23) schoopiert sind, wonach mit dem Schritt i des Verfahrens fortgefahren wird.

3. Verfahren zur Herstellung von Folienkondensatoren nach Anspruch 1, in dem die Anzahl n der Schichtungen ungerade ist, dadurch gekennzeichnet, daß nach dem Schritt e die Schichtungen zwischen den Untermengen n und n-1 einerseits und 1 und 2 andererseits getrennt werden, die vier auf diese Weise erzeugten Seitenflächen schoopiert werden, der Ablauf so lange wiederholt wird, bis drei nebeneinanderliegende Schichtungen von Mutterkondensatoren erhalten werden, zwischen zwei der drei aufeinanderfolgenden Schichtungen getrennt werden, die beiden so erzeugten Seitenflächen schoopiert werden und dann der selbe Ablauf mit den beiden übrigen Schichtungen wiederholt wird, und schließlich der Verfahrensschritt e ausgeführt wird.

4. Verfahren zur Herstellung von Folienkondensatoren nach einem der Ansprüche 1 bis 4, dadurch gekennzeichnet, daß eine Zwischenschicht in Form eines Films aus Plastikmaterial verwendet wird.

5. Herstellungsverfahren für Folienkondensatoren nach einem der Ansprüche 1 bis 4, dadurch gekennzeichnet, daß die gemeinsame Zwischenschicht eine Metallzwischenschicht ist.

6. Verfahren zur Herstellung von Folienkondensatoren nach einem der Ansprüche 5 oder 6, dadurch gekennzeichnet, daß die Zwischenschicht an den zwischen den Schichtungen gelegenen Stellen vorgeschnitten wird.

7. Verfahren zur Herstellung von Folienkondensatoren nach einem der Ansprüche 1 bis 7, dadurch gekennzeichnet, daß der Abstand jedes Mutterkondensators $(m_i, n_i)$ einer Schichtung vom Kondensator, der der benachbarten Schichtung $(m_i, n_{i+1}$ oder $n_{i-1})$ am nächsten liegt, ausreichend ist, daß nach Trennung der beiden benachbarten Schichtungen die Zwischenschichten überstehen, um die Trennung der Mutterkondensatoren entlang der Zwischenschichten nach dem Schoopieren der Seitenflächen zu ermöglichen.

8. Verfahren zur Herstellung von Folienkondensatoren nach einem der Ansprüche 1 bis 8, dadurch gekennzeichnet, daß jeder Mutterkondensator durch gleichzeitige Wicklung von zwei Filmen aus metallisiertem Plastikmaterial hergestellt wird, dessen Metallschichten seitlich gegeneinander versetzt sind.

## Claims

1. Method of producing layered capacitors formed of dielectric layers separated by metallic layers or coatings, said metallic layers or coatings being susceptible of being connected by lateral electrical connections, the even ones with each other and the odd ones with each other, the method comprising a step:

a- of forming a layer of n mother capacitors (12, 13) side by side on the same carrier (10, 11), in a manner known per se,

the method being characterized in that it comprises the further steps:

b - of depositing a common shim (14) on the n mother capacitors (12, 13),

c- of forming on this common shim (14) a further layer of n mother capacitors (12, 13) side by side whereof the edges are substantially aligned with those of the preceding layer in the same pile,

d- of repeating the steps b and c in a manner to provide a set formed of n piles of n mother capacitors (12, 13) in side by side relationship, each pile comprising m layers,

e- of generally metallizing the two outer lateral flanges (15, 16) of the set,

f- of separating in parallel to the metallized lateral flanges at least between two successive piles of mother capacitors in a manner to provide two sub-sets of mother capacitors (12) each comprising one of the two lateral flanges (15, 16) coated with contacting metal and an unmetallized lateral flange (22, 23),

g- of metallizing the unmetallized lateral flange (22) of each sub-set,

h- of repeating the steps f and g, in case of need, until n sub-sets of m mother capacitors (12) are obtained the two outer lateral flanges (15, 22) of which are metallized,

i- of separating the mother capacitors from each other, in a manner known per se.

2. Method of producing layered capacitors according to claim 1, wherein the number n of piles is an even number, characterized in that, after step e, a separation is made between the piles n and n-1 on the one hand and the piles 1 and 2, on the other hand, the thus formed four lateral flanges are metallized and these separating and metallizing operations are repeated until n sets of m mother capacitors (12, 13) are obtained the two lateral flanges (15,22, 16, 23) of which are metallized, whereupon step i of the method is performed.

3. Method of producing layered capacitors according to claim 1, wherein the number n of piles id odd, characterized in that, after the step e, the piles are separated between the sub-sets n and n-1 on the one hand and 1 and 2 on the other hand, the four thus formed lateral flanges are metallized, the operation is repeated until three piles of mother capacitors in side by side relationship are obtained, a separation is made between two of the three successive piles, the two thus formed lateral flanges are metallized and the same operation is repeated with the two remaining piles, and finally the step i of the method is performed.

4. Method of producing layered capacitors according to any of claims 1 to 4, characterized in that a shim is used in the form of a plastic material film.

5. Method of producing layered capacitors according to any of claims 1 to 4, characterized in that the common shim is a metallic shim.

6. Method of producing layered capacitors according to any of claims 5 and 6, characterized in that the shim is pre-cut at the locations lying between the piles.

7. Method of producing layered capacitors according to any of claims 1 to 7, characterized in that the distance of each mother capacitor $(m_i, n_i)$ of a pile from the nearest capacitor of the adjacent pile $(m_i, n_{i+1}$ or $n_{i-1})$ is sufficient so that the shims, after separation of two adjacent piles, project to permit the separation of the mother capacitors along the shim layers after the metallizing of the lateral flanges.

8. Method of producing layered capacitors according to any of claims 1 to 8, characterized in that each mother capacitor is formed by simultaneous coiling of two films of metallized plastic material the metallic layers of which are laterally shifted with respect to each other.

FIG_1

FIG_2

FIG_3

FIG_4

FIG_5

# FIG_6